# EUROPÄISCHE PATENTANMELDUNG

(11) **EP 1 634 804 A1**
(43) Veröffentlichungstag der Anmeldung: **15.03.2006**
(21) Anmeldenummer: 04425674.1
(22) Anmeldetag: 09.09.2004
(51) Int. Cl.: B62K 13/00

(54) **Bindung für Schnee-Kit**

(71) Anmelder: Elementi, Gianfranco, 47900 Rimini (RN) (IT)
(72) Erfinder: Elementi, Gianfranco, 47900 Rimini (RN) (IT)

(57) **Zusammenfassung**

Die "BINDUNG FÜR SCHNEE-KIT" ist ein System, welches als Stütze für die Montage eines Skis an der Vorderseite eines Motoscooters oder eines Motorrades fungiert.

Die vorliegende mechanische Bindung ist ein System, welches die Gabeln eines Motorrades mit einem Ski, der an der Unterseite der Bindung eingebaut ist, verbindet.

## Beschreibung

Die vorliegende Erfindung besteht aus einem System, welches die Gabeln eines Motoscooters oder eines Motorrades mit einem an der Unterseite eingebauten Ski mechanisch verbindet.

Die Gittergehäuse-Bindung fungiert als Stütze für die Montage eines Skis an der Vorderseite eines Motoscooters oder eines Motorrades.

Die mechanische Bindung ist innerhalb zweier Gabelscheiden eingefügt.

Die Anwendung der obengenannten mechanischen Bindung ist dieselbe wie bei allen normalen Vorderrädern der Motoscooter und der Motorräder und ihre Funktion besteht darin, dass sie beim Baskulieren und beim Schwingen die Befahrbarkeit auf Schneedecken, auf Eis- und auf Sandflächen ermöglicht.

Es gibt zur Zeit auf dem Markt keine Bindung, welche die Vordergabeln eines Motorrades mit einem Ski verbindet.

Figur 1 zeigt die Frontansicht der mechanischen Bindung und die Befestigungspunkte am Skibrett, sie zeigt außerdem das Gehäuse der Lager, welche die Nabe der Vorderräder ersetzen werden.

In Figur 2 sind die Seitenansicht der mechanischen Bindung mit deren entsprechenden Befestigungspunkten sowie die Sicherungshalterungen für den Bodenablauf gezeigt.

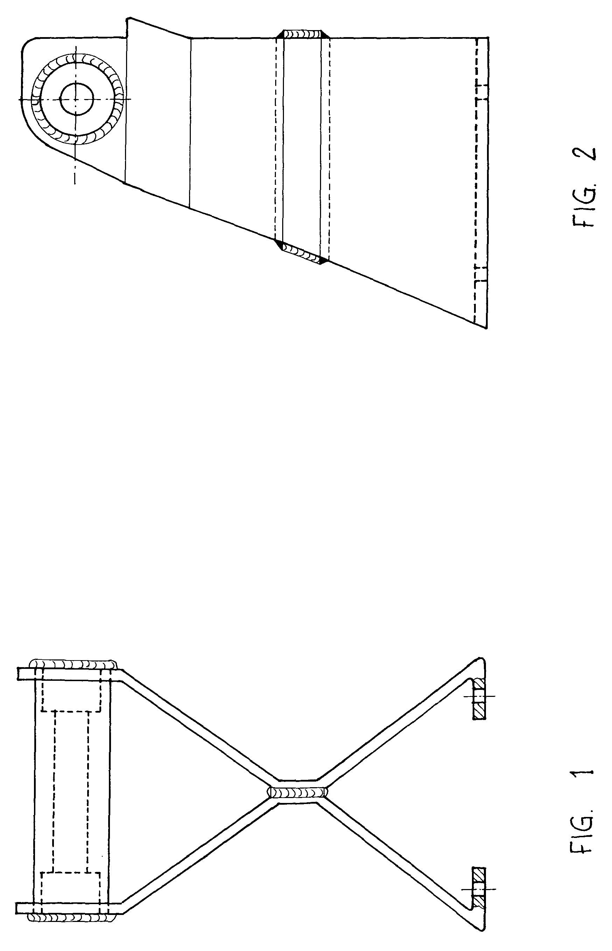

Figur 2 zeigt auch die Ansicht des Gehäuses der Lager, welche innerhalb der Bindung montiert sind.

## Patentansprüche

1. Die "Bindung für Schnee-Kit" ersetzt das Vorderrad eines Motoscooters oder eines Motorrades durch einen Ski.

2. Die "Bindung für Schnee-Kit" vereinfacht die Umgestaltung eines Fahrzeugs, das zur Straßenbenutzung für Personen- und Sachbeförderung auf Schneedecken, auf Eis- und auf Sandflächen bestimmt werden kann.

3. Die "Bindung für Schnee-Kit" ist ein System, welches die Gabeln eines Motorrades mit einem Ski, der an der Unterseite der Bindung eingebaut ist, verbindet.
